# EUROPÄISCHE PATENTSCHRIFT

(11) **EP 3 674 065 B1**
(45) Veröffentlichungstag und Bekanntmachung des Hinweises auf die Patenterteilung: **05.02.2025**
(21) Anmeldenummer: 19219025.4
(22) Anmeldetag: 20.12.2019
(51) Int. Cl.: B29C 65/20, B23C 3/12, E06B 3/96, B29C 37/04, B29K 27/06

(54) **VERFAHREN UND VORRICHTUNG FÜR DAS VERSCHWEISSEN VON PROFILSTÄBEN**
METHOD AND DEVICE FOR WELDING PROFILE BARS
PROCÉDÉ ET DISPOSITIF DE SOUDAGE DE BARRES PROFILÉES

(30) Priorität: 27.12.2018 DE 102018133638
(43) Veröffentlichungstag der Anmeldung: 01.07.2020
(73) Patentinhaber: Urban GmbH & Co. Maschinenbau KG, 87700 Memmingen (DE)
(72) Erfinder: Henkel, Markus, 87752 Holzgünz-Schwaighausen (DE)
(74) Vertreter: Patentanwälte Olbricht, Buchhold, Keulertz Partnerschaft mbB

(56) Entgegenhaltungen:
- DE-A1- 102016 104 806
- DE-A1- 4 018 145
- GB-A- 2 376 656
- US-A- 3 186 891

## Beschreibung

Die Erfindung betrifft ein Verfahren und eine Vorrichtung für das Verschweißen eines ersten, aus Kunststoff bestehenden Profilstabes mit einem zweiten, aus Kunststoff bestehenden Profilstab.

Aus der US 3,186,891 A ist eine Vorrichtung zum Verschweißen von Kunststoffprofilen bekannt, wobei die Kunststoffprofile vor Verschweißen in deren Gehrungsbereich mit einem Abstechmesser bearbeitet werden.

Die DE 10 2016 104 806 A1 offenbart ein Verfahren zum Verbinden von Profilstücken, wobei ein Toleranzausgleich an den Verbindungsflächen der Profilstücke durch ein Abtrennen von Profilmaterial mittels eines Bearbeitungswerkzeugs erfolgt.

Aus der GB 2 376 656 A offenbart eine Vorrichtung und ein Verfahren zum Verschweißen von Kunststoffprofilen. Die Kunststoffprofile werden von dem Plastifizieren mittels einer Kreissäge im Gehrungsbereich angeschnitten, um einen nutartigen freigestellten Bereich zu erzeugen, welcher der Aufnahme von geschmolzenem Material zur Ausbildung einer Schweißwulst dient. Die DE 40 18 145 A1 lehrt eine Verputzvorrichtung für Fensterrahmen, wobei sie Abstechmesser für den Rahmen aufweist.

Im Stand der Technik ist es bekannt Fensterrähmen oder Teilrähmen von Fensterrähmen in Schweißmaschinen, also in Maschinen für die Verbindung von Profilstäben, herzustellen. In diesen Maschinen kommen die eingangs beschriebenen Vorrichtungen bzw. Verfahren zum Einsatz. Die Profilstäbe bestehen dabei aus Kunststoff, bevorzugt aus thermoplastischen Kunststoff, wie zum Beispiel PVC. Wird dieser Kunststoff ausreichend erwärmt, so geht dieser eine materialschlüssige Verbindung mit einem anderen, entsprechend erwärmten Kunststoffstück ein. Solche Stäbe können daher miteinander verschweißt werden.

Die in diesen Maschinen eingesetzten Verfahren weisen dabei folgende Schritte auf:
- Bereitstellen des ersten Profilstabes und des zweiten Profilstabes
- Erwärmen der Profilstäbe zumindest an ihren Gehrungsflächen
- Zusammenbringen der Gehrungsfläche des ersten Profilstabes mit der Gehrungsfläche des zweiten Profilstabes so, dass die erwärmten Bereiche der Gehrungsflächen eine materialschlüssige Verbindung zwischen dem ersten und den zweiten Profilstab ergibt.

Die hierfür eingesetzte Vorrichtung weist zumindest je eine, insbesondere entlang zumindest einer Raumrichtung bewegbare Spannvorrichtung für das Halten bzw. Positionieren des jeweiligen Profilstabes und einen Heizspiegel auf, welcher zumindest entlang einer (weiteren) Raumrichtung beweg- und positionierbar gelagert ist und für die Erwärmung zumindest der Gehrungsfläche des Profilstabes oder der Profilstäbe vorgesehen ist. Die Profilstäbe liegen hierbei winkelig zueinander in der Vorrichtung.

Der hierbei von den Profilstäben eingeschlossene Winkel entspricht in der Regel auch dem Winkel des zu erstellenden Rahmenecks. Die Profilstäbe sind dabei längs ihrer Längserstreckung auf den jeweiligen Spannverrichtungen beweg- und positionierbar. Natürlich ist die Spannvorrichtung auch an entsprechenden Längspositionen, mit entsprechenden Kräften arretierbar.

Bei dieser Herstellung der Kunststofffensterrahmen besteht seit jeher die Anforderung, dass der Eckbereich, also der Bereich, wo die Profilstäbe miteinander verschweißt werden, am Ende optisch ansprechend aussieht. Um eine stabile Verbindung im Eckbereich zu erzeugen, muss über ein gewisses Volumen eine formschlüssige Verbindung der Materialien der beiden Profilstäbe hergestellt werden, wobei dann das Zusammenführen der beiden Profilstäbe zu der Ausbildung eines Schweißwulstes auch an den äußeren, sichtbaren Flächen führt. Im Stand der Technik ist es daher bekannt, separate Verputzmaschinen einzusetzen, auf denen die produzierten Fensterrahmen im Eck- bzw. Gehrungsbereich separat nachgearbeitet werden.

Bei dieser Vorgehensweise ist es günstig, dass die bei der Nachbearbeitung entstehenden Kunststoffspäne (dieses Material ist ja thermoplastisch) nicht im Bereich der beheizten Flächen der Schweißmaschine entstehen, die dort unter Umständen den Herstellungsprozess behindern würden. Nachteilig ist dabei allerdings, dass eine zweite Maschine vorgesehen werden muss, was einerseits mit zusätzlichen Investitionsaufwand (in Aufstellplatz und Maschinenpark) verbunden ist und zum anderen auch die Herstellung solcher Fensterrahmen verlangsamt, also teurer macht, da die Fensterrahmen ein zweites Mal positionsgenau für die Bearbeitung des Eck- bzw. Gehrungsbereiches aufgespannt werden müssen.

Die Erfindung hat es sich zur Aufgabe gemacht diesen Stand der Technik zu verbessern und insbesondere einen Vorschlag zu entwickeln, der einerseits eine optisch ansprechende Gestaltung des Eckbereiches der Kunststofffensterrahmen erlaubt und dabei andererseits wirtschaftlich effizient ist.

Die Aufgabe ist gelöst mit einem Verfahren gemäß Anspruch 1 und einer Vorrichtung gemäß Anspruch 5.

Zur Lösung dieser Aufgabe geht die Erfindung aus von einem Verfahren wie eingangs beschrieben und schlägt ein Bearbeiten zumindest eines Profilstabes, insbesondere in seinem Gehrungsbereich, mit einem Abstechmesser vor.

Des Weiteren schlägt die Erfindung zur Lösung dieser Aufgabe vor, dass in der Vorrichtung ein Abstechmesser für die Bearbeitung des Gehrungsbereiches des Profilstabes vorgesehen ist, wobei das Abstechmesser zumindest entlang einer Raumrichtung beweg- und positionierbar gelagert ist.

Der Einsatz eines Abstechmesser in einer Vorrichtung bzw. einem Verfahren nach dem Stand der Technik eröffnet überraschende Vorteile! Durch den Einsatz des Abstechmessers kann nun die Gehrungsfläche bearbeitet werden, wobei geschickter Weise die Orientierung der Schneide des Abstechmessers so gewählt werden kann, um eine gewünschte Bearbeitung zu realisieren, ohne hierfür einen zusätzlichen Antrieb oder Freiheitsgrad in der Maschine realisieren zu müssen. Auch ist überraschenderweise gefunden worden, dass das neben dem heißen Heizspiegel eingesetzte Abstechmesser zu keinen zusätzlichen Problemen führt, da der bevorzugt einzelne, lange Span, der durch das Abstechmesser erzeugt wird, durch entsprechende aktive oder passive Abführvorrichtungen, insbesondere einen Abführkanal sicher und zuverlässig von dem Heizspiegel entfernt gehalten werden kann und so nicht stört.

In einer vorteilhaften Ausgestaltung ist vorgesehen, dass das Verfahren genau in der Reihenfolge der folgenden Schritte ausgeführt wird:
- Bereitstellen des ersten Profilstabes und des zweiten Profilstabes
- Bearbeiten zumindest eines Profilstabes, insbesondere in seinem Gehrungsbereich, mit einem Abstechmesser
- Erwärmen der Profilstäbe zumindest an ihren Gehrungsflächen
- Zusammenbringen der Gehrungsfläche des ersten Profilstabes mit der Gehrungsfläche des zweiten Profilstabes so, dass die erwärmten Bereiche der Gehrungsflächen eine materialschlüssige Verbindung zwischen dem ersten und den zweiten Profilstab ergibt.

In dieser Variante erfolgt das Bearbeiten mit dem Abstechmesser vor dem Erwärmen des Profilstabes, der Profilstab ist also bei der Bearbeitung durch das Abstechmesser noch kalt und nicht plastifiziert. Dies ist insbesondere für eine exakte finale Formgebung, die außen sichtbar ist, von Vorteil.

In einer hierzu alternativen Ausführungsform ist vorgesehen, dass das Verfahren genau in der Reihenfolge der folgenden Schritte ausgeführt wird:
- Bereitstellen des ersten Profilstabes und des zweiten Profilstabes
- Erwärmen der Profilstäbe zumindest an ihren Gehrungsflächen
- Bearbeiten zumindest eines Profilstabes, insbesondere in seinem Gehrungsbereich, mit einem Abstechmesser
- Zusammenbringen der Gehrungsfläche des ersten Profilstabes mit der Gehrungsfläche des zweiten Profilstabes so, dass die erwärmten Bereiche der Gehrungsflächen eine materialschlüssige Verbindung zwischen dem ersten und den zweiten Profilstab ergibt.

Bei dieser alternativen erfindungsgemäßen Variante wird das Abstechmesser dazu eingesetzt, bereits durch den Heizspiegel plastifizierte Bereiche des aus Kunststoff bestehenden Profilstabes (nach) zu bearbeiten. Das Abstechmesser kann daher dazu eingesetzt werden überflüssig plastifiziertes Material vor einem Zusammenbringen der Gehrungsfläche (dem letzten Verfahrensschritt) zu entfernen und so die Masse des Materiales, welches für die Verschweißung und zur Bildung eines Schweißwulstes zur Verfügung steht, zu reduzieren.

Erfindungsgemäß ist dabei auch folgende Abfolge der Verfahrensschritte möglich:
- Bereitstellen des ersten Profilstabes und des zweiten Profilstabes
- (erstmaliges) Bearbeiten zumindest eines Profilstabes, insbesondere in seinem Gehrungsbereich, mit einem Abstechmesser
- Erwärmen der Profilstäbe zumindest an ihren Gehrungsflächen
- (nochmaliges) Bearbeiten zumindest eines Profilstabes, insbesondere in seinem Gehrungsbereich, mit einem Abstechmesser
- Zusammenbringen der Gehrungsfläche des ersten Profilstabes mit der Gehrungsfläche des zweiten Profilstabes so, dass die erwärmten Bereiche der Gehrungsflächen eine materialschlüssige Verbindung zwischen dem ersten und den zweiten Profilstab ergibt.

Bei dieser Verfahrensführung wird das Abstechmesser mindestens zweimal eingesetzt, nämlich einmal vor dem Erwärmen durch den Heizspiegel, und einmal nach dem Erwärmen. Es müssen daher nicht zwingender Weise bei diesen beiden Bearbeitungsschritten die gleichen Bereiche mit dem Abstechmesser bearbeitet werden, aufgrund der Beweglichkeit des Abstechmessers ist es möglich, dass hierbei unterschiedliche Bereiche der Gehrungsfläche bearbeitet werden.

Natürlich ist es auch möglich, nach dem zweiten, bzw. nochmaligen Bearbeiten durch das Abstechmesser den Gehrungsbereich bzw. die Gehrungsfläche nochmals zu erwärmen. Dies führt zu einer optimierten Ausgestaltung des Verbindungsbereiches d.h. des Materials, das miteinander verschweißt wird.

Des Weiteren ist in dem Vorschlag vorteilhafter Weise vorgesehen, dass die Profilstäbe je auf einer Spannvorrichtung aufgespannt bereitgestellt werden, und zumindest eine Spannvorrichtung mit dem gespannten Profil während der Bearbeitung bewegt wird.

Die Erfindung umfasst auch die Variante, dass ein Bearbeiten der verschweißten Profilstäbe mit einem Abstechmesser nach dem Zusammenbringen der Gehrungsflächen der beiden Profilstäbe und deren Verschweißen in der Schweißmaschine erfolgt. Geschickterweise wird hierzu die aufgespannte Stellung der beiden Spannvorrichtungen nicht gelöst, d.h., diese Bearbeitung erfolgt in der gleichen Aufspannung der Profilstäbe und spart daher entsprechend Zeit.

Ein Vorzug des erfindungsgemäßen Verfahrens ist, dass dieses bei der Abfolge der verschiedenen Schritte mehrere Möglichkeiten eröffnet, um den erfindungsgemäßen Erfolg zu erzielen. Bevorzugt werden dabei Lösungen, bei welchen ein Bearbeiten durch das Abstechmesser erst dann erfolgt, wenn der jeweilige Profilstab vorzugsweise in der Spannvorrichtung aufgespannt bereitgestellt ist und diese Aufspannung für weitere Bearbeitungen vor oder nach dem Abstechen, ohne Lösen der Spannvorrichtung, nochmals genutzt wird.

Moderne Maschinen, in denen die Vorrichtung bzw. das Verfahren nach der Erfindung eingesetzt werden, sind oftmals mit CNC-Achsen ausgestattet. Diese CNC-Achsen erlauben es, Elemente entlang einer Längserstreckung (Achse), in einer Fläche oder im Raum exakt zu positionieren, aber auch innerhalb der jeweiligen Geometrie exakt zu bewegen. Es ist daher vorgesehen, sowohl die Spannvorrichtung, die den Profilstab hält (entweder nur eine Spannvorrichtung oder beide Spannvorrichtungen, somit werden auch beide Profilstäbe bewegt) mit mindestens einer entsprechenden CNC-Achsen auszustatten, wie auch die Halterung des Schneidmessers und gegebenenfalls auch den Heizspiegel. Im Ergebnis können dann in der Fläche bzw. im Raum komplex liegende Bearbeitungskurven für das Abstechmesser realisiert werden. Durch eine solche Ausgestaltung wird die Flexibilität des Vorschlages erheblich gesteigert.

Bei einer bevorzugten Ausgestaltung des Vorschlags ist vorgesehen, dass die Bearbeitung des Profilstabes durch das Abstechmesser in einem oder in mehreren Schritten erfolgt. Der Vorschlag ist bei der Ausgestaltung des Einsatzes des Abstechmessers sehr flexibel. Es ist zum Beispiel möglich, das Abstechmesser in nur einem Schritt, also in einem langgezogenen Schnitt, einzusetzen und so diesen Bearbeitungsschritt abzuschließen. Bei komplexeren Bearbeitungen (z.B. bei komplexeren zu bearbeitende Profilkonturen) kann es hingegen günstig sein, den Bearbeitungsschritt in mehrere Teilschritte aufzuteilen und zwischen diesen Teilschritten zum Beispiel eine Neuorientierung des Abstechmessers (zum Beispiel eine Neupositionierung oder auch Neuausrichtung der Schneide des Abstechmessers durch eine andere Orientierung) vorzunehmen.

Es ist klar, dass diese Eigenschaften des Abstechmessers gerade kombiniert mit der Beweglichkeit der Spannvorrichtung/en und natürlich der Beweglichkeit des Abstechmessers selber die Möglichkeiten zur Bearbeitungen erheblich erhöhen und auch die Bearbeitung komplexer Konturen an der Gehrungsfläche, bzw. im Gehrungsbereich erlaubt.

Der Vorschlag sieht zum einen vor, dass (insbesondere nur) die Profilkante, die die Profilaußenseite, insbesondere die Profilober-, Profilunterseite, der Innenfalz, oder die Außenecke, und die Gehrungsfläche des Profilstabes begrenzt, durch das Abstechmesser bearbeitet wird.

Hierauf ist der Einsatz des Abstechmessers gemäß der Erfindung aber nicht begrenzt, es können auch die Stegwände, die die Profilkammern im Inneren des Querschnittes voneinander abgrenzen, in gleicher Weise von dem Abstechmesser bearbeitet werden. Der Vorzug gerade bei der Bearbeitung der Profilkante, also an der Profilaußenseite, besteht darin, dass dies die Sichtbereiche an der Außenseite der Eckverbindung darstellen und dort die vorgeschlagene Bearbeitung mit dem Abstechmesser zu einer sichtbaren Verbesserung des so hergestellten Rahmens oder Teilrahmens führt.

Gemäß der Erfindung bearbeitet das Abstechmesser den Profilstab, insbesondere in seinem Gehrungsbereich. Der Gehrungsbereich ist dadurch definiert, dass in diesem Bereich eine Verschweißung mit dem anderen Profilstab erfolgt. Der Gehrungsbereich umfasst daher die Gehrungsfläche, also die stirnseitige Fläche des geschnittenen, bevorzugt schräggeschnittenen Profilstabes und auch die jeweiligen Profilkanten, sowie einige Millimeter (je nach Grad der Erwärmung kann das 3,7 oder auch mehr als 10 Millimeter betragen) des Endbereiches des Profilstabes in Längsrichtung des Profilstabes. Es sei hier ausdrücklich erwähnt, dass sich die Bearbeitung durch das Abstechmesser nicht auf den Gehrungsbereich beschränkt, also die erfindungsgemäß vorgeschlagene Vorrichtung wie auch das Verfahren auch den Einsatz des Abstechmessers an anderen Bereichen des Profilstabes, entfernt von dem Gehrungsbereich, ausdrücklich umfasst und einschließt.

Erfindungsgemäß ist bei der Vorrichtung eine Halterung vorgesehen, die das Abstechmesser trägt. Es ist dabei vorgesehen, dass die Halterung das Abstechmesser direkt, also unmittelbar oder indirekt, also mittelbar, zum Beispiel über weitere Elemente, trägt. In einer verbesserten Ausgestaltung ist vorgesehen, dass an der Halterung mehr als ein Abstechmesser vorgesehen ist. Daher ist es günstiger Weise möglich, dass gleichzeitig ein erstes Abstechmesser den ersten Profilstab und ein zweites Abstechmesser den zweiten Profilstab bearbeitet. Eine solche Bearbeitungsweise ist nicht nur effizient, also zeitsparend, sondern bewirkt auch eine hohe Genauigkeit. Geschickter Weise sind die beiden Profilstäbe je auf einer zumindest längsverschieblichen Spannvorrichtung aufgespannt und entlang dieser Raumrichtung aufgrund der CNC-Achsen Ausgestaltung exakt relativ zur Halterung mit den Abstechmesser positionierbar. Dabei ist gefunden worden, dass eine möglichst exakte parallele Vorbereitung der Gehrungsfläche zueinander das Schweißergebnis verbessert. Aufgrund dieser parallelen Ausrichtung der Gehrungsfläche zueinander können dann die beiden Abstechmesser an dem ersten und den zweiten Profilstab (bevorzugt im gleichen Arbeitsschritt) in gleicher Weise entsprechende Bearbeitungen ausführen, zum Beispiel eine Fase an der Profilkante vorsehen, die dann bei dem verschweißten Eckbereich zu einer Schattennut zusammengeführt werden oder in anderer Weise effizient die Ausbildung eines Schweißwulstes vermeidet. Mit einer Schattennut sind die Profiltoleranzen im Gehrungsbereich in idealer Weise optische ausgleichbar.

Des Weiteren ist bei der Vorrichtung vorgesehen, dass die Halterung auch mindestens einen Fräser, insbesondere einen Planfräser trägt. Der Fräser, insbesondere der Planfräser erlaubt zusätzliche Bearbeitungsmöglichkeiten, insbesondere wird die Bearbeitung in geschickter Weise zwischen diesen beiden spanabhebenden Bearbeitungswerkzeugen (Abstechmesser und Fräser) aufgeteilt. Vorzugsweise ist zum Beispiel das Abstechmesser für die Bearbeitung der Profilkante vorgesehen, also für den sichtbaren Außenbereich des Profils, wobei auf der anderen Seite der (Plan-)Fräser bevorzugt die Querschnittsfläche im Ganzen bearbeitet. Natürlich ist es auch möglich, dass zuerst eine flächige Bearbeitung durch den Fräser erfolgt und hernach, gegebenenfalls unter Neupositionierung der Halterung relativ zu dem Profilstab/den Profilstäben, das Abstechmesser die Profilkante nachbearbeitet. Durch die Anordnung des Fräsers und des Abstechmessers auf einer gemeinsamen Halterung kann die Beweglichkeit der Halterung sowohl für das Abstechmesser wie auch für den Fräser genutzt werden. Die Halterung nimmt dabei auch einen Rotationsantrieb für den Fräser auf.

Zwar sind Abstechmesser und Fräser, insbesondere Planfräser, jeweils spanabhebende Werkzeuge, diese unterscheiden sich aber doch eindeutig voneinander. Ein Fräser ist an einer Halterung drehbar, von einem Rotationsantrieb angetrieben, gelagert. Die Halterung verfährt das Werkzeug entlang des Bearbeitungsweges. Hingegen ist das Abstechmesser an der Halterung starr angeordnet.

Der Fräser besitzt in der Regel eine Mehrzahl von Schneiden, auch wenn sogenannte Einschneidenfräser bekannt sind. Die Schneide/n sind beim Fräser während der Bearbeitung, entlang des Bearbeitungsweges, nur temporär im Materialeingriff. Hingegen ist das Abstechmesser entlang seines Bearbeitungsweges dauerhaft im Materialeingriff.

Aufgrund des unterschiedlichen Einsatzes der Schneiden des Fräser und des Abstechmessers sind auch die bei der Verwendung der Bearbeitungswerkzeuge erzeugten Späne charakteristisch unterschiedlich. Der Fräser erzeugt relativ kurze Späne, wohingegen das Abstechmesser wenige, möglichst nur einen, dafür einen sehr langen Span erzeugt.

In der erfindungsgemäßen Lösung ist weiter vorgesehen, dass vor dem Erwärmen der Profilstab, insbesondere die Gehrungsfläche, von einem Fräser, insbesondere von einem Planfräser bearbeitet wird. Es sind dabei verschiedene Verfahrensweisen möglich. Zunächst ist vorgesehen, dass zuerst die Bearbeitung durch den Fräser und dann die Bearbeitung durch das Abstechmesser erfolgt. Eine umgekehrte Reihenfolge ist aber auch möglich, d.h. zunächst bearbeitet das Abstechmesser und hernach erfolgt eine Fräsung. Natürlich können diese beiden Bearbeitungen gemäß einer Variante der Erfindung auch gleichzeitig ausgeführt werden. In einer weiteren Variante ist vorgesehen, dass der Fräser auch nach einem Erwärmen der Gehrungsfläche nochmals eingesetzt wird.

Die Bearbeitungsmöglichkeiten einer so ausgestatteten Vorrichtung werden erheblich gesteigert, wenn das Abstechmesser mit einem Fräser kombiniert eingesetzt wird. Für schnelles, großflächiges Bearbeiten dient zum Beispiel der Fräser, für das Einarbeiten einer entsprechenden Fase an der Profilkante ist das Abstechmesser vorgesehen wobei das Abstechmesser in seiner Kontur frei wählbar und in seiner Positionierung ebenfalls beliebig einstellbar ist und so auch komplexe Bearbeitungen ermöglicht.

Des Weiteren ist günstiger Weise vorgesehen, dass die Halterung mindestens ein erstes und ein zweites Abstechmesser und/oder einen ersten und einen zweiten Fräser, insbesondere Planfräser trägt. Dabei ist die Anordnung so gewählt, dass die eine Halterung die Bearbeitungswerkzeuge für das Bearbeiten der beiden, also der zwei Profilstäbe, die an der Vorrichtung angeordnet sind und die zusammengeschweißt werden sollen, trägt. Dabei ist vorgesehen, dass nicht nur ein Abstechmesser pro Profilstab, sondern auch mehr als ein Abstechmesser pro Profilstab vorgesehen sind. Wie bereits ausgeführt besitzt die Halterung eine entsprechende Beweglichkeit, bevorzugt eine Beweglichkeit in einer Fläche (insbesondere bevorzugt parallel zur Verschweißungsfläche), hierfür sind entsprechende CNC- Achsen für den Antrieb der Halterung vorgesehen.

Die Verschweißungsfläche ist dabei diejenige Fläche, entlang jene die eigentliche Verschweißung erfolgt, also die beiden Gehrungsflächen ineinander geführt werden. Als Gehrungsfläche wird dabei die schräg abgeschnittene Profilstirnseite bezeichnet.

Die den Profilstab am Ende an der Außenseite begrenzende Profilkanten verlaufen zum einen nicht immer parallel zueinander und sind auf der anderen Seite nicht immer auf der gleichen Seite des Profiles (zum Beispiel oben oder unten) angeordnet. Daher ist es geschickt für die verschiedenen Bearbeitungsanforderungen, insbesondere dem Verlauf der Profilkanten folgend, pro Profilstab mehrere, hierfür speziell adaptierte Abstechmesser vorzusehen.

Erfindungsgemäß ist an der Halterung für jeden Profilstab zumindest ein Fräser, bevorzugt ein Planfräser (für die Bearbeitung der Gehrungsfläche) vorgesehen. In einer Variante der Erfindung ist aber auch vorgesehen, dass die Halterung noch zusätzlich zum Beispiel einen Fingerfräser pro Profilstab trägt, der gegebenenfalls koaxial mit dem Planfräser oder von diesen getrennt, seitlich versetzt zu diesem, an der Halterung angeordnet ist.

Ein Fingerfräser unterscheidet sich von einem Planfräser dadurch, dass bei einem Fingerfräser die Schneide/n, bezüglich der Drehachse, am radialen Ende, axial verlaufend angeordnet sind.

Hiergegen sind bei einem Planfräser die Schneiden am axialen Ende (bezogen auf die Rotationsachse des Fräsers) des Fräskörpers vorgesehen, und erstrecken sich radial.

Geschickter Weise ist vorgesehen, dass die von dem Abstechmesser bzw. Fräser erzeugten Späne abgesaugt werden. Die erzeugten Späne werden sofort nach ihrer Produktion abgesaugt und so effektiv von dem Heizspiegel entfernt und stellen somit kein Verschmutzungsrisiko für den Heizspiegel dar.

Daher ist erfindungsgemäß vorgesehen, dass eine Absaugvorrichtung für das Absaugen der durch den Fräser und/oder das Abstechmesser erzeugten Späne vorgesehen ist. Die vorgeschlagene Absaugungvorrichtung ist bevorzugt für jedes einzelne spanabhebende Werkzeug, also einerseits für den Fräser und andererseits für das Abstechmesser vorgesehen. Geschickter Weise werden die Absaugungvorrichtungen für die verschiedenen spanabhebenden Werkzeuge miteinander kombiniert um somit auch Platz zu sparen. Die Absaugungvorrichtung besitzt zum einem eine Saugvorrichtung, also ein Element das eine entsprechende Luftströmung oder Unterdruck erzeugt, ähnlich einem Gebläse oder einer Turbine, und zum anderen eine Mehrzahl von Kanälen, über die die Luft und damit auch die erzeugten Späne von der Saugvorrichtung angesaugt werden. Dabei beginnen diese Kanäle geschickter Weise gleich in nächster Nähe zu den Schneiden, um die erzeugten Späne sofort in den Wirkbereich der Absaugvorrichtung gelangen zu lassen.

Erfindungsgemäß ist vorgesehen, dass eine Messeraufnahme vorgesehen ist, die das mindestens eine Abstechmesser aufnimmt, und die Messeraufnahme an der Halterung beweglich gelagert ist und durch einen Antrieb in zumindest zwei verschiedene Positionen bringbar ist.

In einer ersten Realisierungsform dieses Vorschlages ist an der Halterung nur eine Messeraufnahme vorgesehen, die das mindestens eine Abstechmesser für die Bearbeitung eines, insbesondere des ersten Profilstabes trägt. Wie bereits erläutert ist es günstig, wenn an der Halterung pro Profilstab mehrere unterschiedlichen Bearbeitungszwecken dienende Abstechmesser vorgesehen sind. Geschickter Weise sind diese Abstechmesser auf einer gemeinsamen Messeraufnahme gelagert und so gegenüber der Halterung, die ja insgesamt eine Beweglichkeit bevorzugt in einer Fläche (parallel zur Verschweißungsfläche) aufweist, aufgrund eines Antriebes zwischen mindestens zwei Positionen verstellbar. Dabei wirkt dieser Antrieb bevorzugt rechtwinklig zu der Bewegungsrichtung der Halterung, erlaubt also ein Anstellen oder ein In-Position-Bringen des mindestens einem Abstechmessers gegenüber dem Profilstab, was vorzugsweise vor der Bearbeitung durch das Abstechmesser erfolgt.

So ist zum Beispiel vorgesehen, dass nach dem Aufspannen der Profilstäbe auf den Spannvorrichtungen und dem jeweiligen Positionieren der Profilstäbe derart, dass die Gehrungsfläche für eine Bearbeitung bzw. ein Verschweißen bereitliegen, zunächst die Halterung mit nicht ausgefahrenen Messeaufnahmen (und nicht im Bearbeitungsposition befindlichen Abstechmesser, die Messeraufnahme befindet sich also in Ruheposition) zwischen den Gehrungsfläche der beiden Profilstäbe positioniert wird. So ist zum Beispiel eine unerwünschte Bearbeitung oder Beschädigung der Profilstäbe zuverlässig zu vermeiden. Soll dann die Bearbeitung durch das Abstechmesser erfolgen wird dieses zunächst durch den Antrieb auf der Messeaufnahme in Arbeitsposition gebracht.

Die Messeraufnahme trägt dabei mehrere Abstechmesser wobei zum Beispiel ein erstes Abstechmesser für die Profiloberseite und ein zweites Abstechmesser für die Profilunterseite vorgesehen ist. Während der Bearbeitung durch das erste Abstechmesser befindet sich die Messeraufnahme in Arbeitsposition, ist also gegenüber der Halterung ausgefahren. Bevor dann die Halterung so versetzt wird, dass das zweite Abstechmesser die Profilunterseite bearbeitet, wird bevorzugt zuerst die Messeraufnahme in die Ruheposition zurückgefahren, um ein unerwünschte Beschädigung des Profilstabes durch die vorstehenden Abstechmesser zu vermeiden. Ist die Halterung dann umgesetzt und neu positioniert kommt die Messeraufnahme wieder in Arbeitsposition und das zweite Abstechmesser bearbeitet die Profilunterseite.

Alternativ können an der Halterung, insbesondere der Messeraufnahme noch dritte oder vierte Abstechmesser vorgesehen sein, die zur Bearbeitung der Innen- oder Außenecke dienen.

Besonders günstig ist die Ausgestaltung mit der beweglichen Messeraufnahme, wenn sich an der Halterung auch ein Fräser befindet. Durch die Verstellbarkeit der Messeraufnahme kann die Bearbeitungsebene des mindestens einen Abstechmessers relativ zur Gehrungsfläche vor oder hinter die Bearbeitungsebene des Fräsers verstellt werden. So ist zum Beispiel vorgesehen, dass in der Ruheposition der Messeraufnahme die Schneiden des Fräser der Gehrungsfläche näher sind, also deren Bearbeitungsebene aktiv ist und zum Beispiel der Fräser eine flächige Abfräsung vornehmen kann. Ist die Messeraufnahme in Arbeitsposition, dann ist die Bearbeitungsebene des Abstechmessers (definiert durch die Bewegung der Halterung in der Fläche bezogen auf die Lage des Abstechmesser) näher an der Gehrungsfläche als die Bearbeitungsebene des Fräser und somit aktiv, um zum Beispiel die Profilkante zu bearbeiten.

Besonders geschickt ist eine zweite Realisierungsform derart, dass an der Halterung zwei von einander getrennte Messeraufnahmen vorgesehen sind, wobei die erste Messeaufnahme die Abstechmesser für die Bearbeitung des ersten Profilstabes und die zweite Messeaufnahme die Abstechmesser für den zweiten Profilstab tragen. Eine solche Ausgestaltung unterstützt und ermöglicht konsequenterweise eine symmetrische, gleichzeitige, und daher auch effiziente Bearbeitung der Profilstäbe durch die jeweiligen Abstechmesser auf den Messeaufnahmen.

Bevorzugt sind die Antriebe der beiden Messeraufnahmen miteinander verbunden, also synchronisiert, was aber die Erfindung nicht beschränkt. Es kann auch günstig sein, die jeweiligen Antriebe unabhängig voneinander anzusteuern, wenn es die jeweilige Bearbeitungsaufgabe erfordert. Der Antrieb kann dabei zum Beispiel als Elektroantrieb, elektromagnetisch oder hydraulisch bzw. pneumatisch (zum Beispiel mit entsprechenden Arbeitszylindern) realisiert sein.

Es ist daher in einer bevorzugten Ausgestaltung des Vorschlages vorgesehen, dass die Halterung mit (mindestens) zwei Fräsern, die bevorzugt als Planfräser ausgestaltet sind, und mit zwei Messeraufnahmen, die ihrerseits (mindestens) ein, bevorzugt mindestens zwei Abstechmesser tragen, ausgestattet ist. In einem ersten Bearbeitungsschritt sind die beiden Fräser aktiv. Hierzu werden zunächst die Enden der Profilstäbe so positioniert, dass mit den Fräsern bevorzugt die Gehrungsfläche bearbeitet bzw. hergestellt werden können. Der Durchmesser des Fräsers muss dabei nicht zwingend größer sein als die Breite oder Höhe des zu bearbeitenden Profilstabes, da der Halterung ja eine Beweglichkeit in der Verschweißungsfläche aufweist. Die beiden Fräser bearbeiten dabei die Gehrungsfläche der beiden Profilstäbe gleichzeitig. Ist diese Bearbeitung abgeschlossen, so werden die Messeraufnahmen in Arbeitsposition gebracht, also die jeweiligen Antriebe aktiviert und es erfolgt dann eine bevorzugt parallele Bearbeitung der jeweiligen Profilkanten. Natürlich ist es möglich, die Bearbeitungsreihenfolge auch umgekehrt oder wiederholt bzw. mehrfach abwechselnd wiederholend auszuführen.

Des Weiteren erlaubt die Anordnung der Abstechmesser auf der Messeraufnahme auch eine zusätzliche Bearbeitungsmöglichkeit. So ist zum Beispiel der Antrieb für das Positionieren der Messeraufnahme als CNC-Achse ausgebildet und erlaubt eine entsprechende Bewegung der Messeraufnahme während der Bearbeitung und so auch eine entsprechende Realisierung der Bewegungsbahn. So ist zum Beispiel vorgesehen, dass die Bewegung der Messeaufnahme mit der Bewegung der Halterung und/oder der Bewegung der Spannvorrichtung mit dem aufgespannten Profilstab entsprechend kombiniert und überlagert wird. Dies schließt nicht aus, dass auch diese CNC-Achse zwei Endlagen für die Positionierung der Messeraufnahme besitzt, nämlich eine Arbeits- und eine Ruheposition.

Des Weiteren ist in dem Vorschlag vorteilhafter Weise vorgesehen, dass an der Halterung bzw. der Messeraufnahme eine Schnellwechselvorrichtung für das Abstechmesser vorgesehen ist. Die Anordnung einer Schnellwechselvorrichtung hat den Vorteil, dass die Abstechmesser zum Beispiel im Verschleißfall, aber auch bei einer Änderung der gewünschten Schneidkontur schnell und effizient ausgetauscht werden können. Eine Schnellwechselvorrichtung zeichnet sich dabei dadurch aus, dass das Abstechmesser möglichst nur vor einem Halteelement gehalten wird welches zu öffnen ist. Das Halteelement kann zum Beispiel ein Federverschluss oder eine Schraube sein.

Mithilfe der vorgeschlagenen Schnellwechselvorrichtung ist es auch möglich, das Abstechmesser zum Beispiel um seine Längsachse oder der hierzu rechtwinkligen Mittelachse zu drehen oder zu verschwenken, um dadurch eine weitere Orientierung der Schneidkante des Abstechmessers für die Bearbeitung der Profilstäbe zur Verfügung zu stellen. Insbesondere kann hier mit einem Handgriff in einfacher Weise eine weitere Bearbeitungsebene oder Bearbeitungskante realisiert werden, für die ansonsten eine zusätzliche Drehachse in der Vorrichtung notwendig wäre.

Bei einer bevorzugten Ausgestaltung des Vorschlags ist vorgesehen, dass seitlich neben dem Abstechmesser ein Abtastelement für die Erfassung der Profilkontur vorgesehen ist. Eine solche Ausgestaltung hat den Vorteil, dass das Abstechmesser exakt geführt wird, und zwar unabhängig von der konkreten Ausgestaltung der Profilkante. Es ist zu beachten, dass die Profile gewisse Maßtoleranzen aufweisen und eine starre, nach festen Bearbeitungskoordinaten gesteuerte Bearbeitung unter Umständen mit den toleranzbehafteten Profilstäbe nicht zu den erwünschten Bearbeitungsergebnissen führen kann. Es ist daher günstig in einer Variante des Vorschlages neben der Schneide des Abstechmessers, also seitlich neben dem Abstechmesser, ein Abtastelement, zum Beispiel eine Tastflanke oder Ähnliches, sowie eine leichte Federung des Abstechmessers rechtwinklig zu seiner Bewegungsbahn, also in der Richtung, wo sich die Toleranz ausbildet, vorzusehen. Durch die Federung wird sichergestellt, dass das Abtastelement immer zuverlässig auf der Profilseite, auch bei entsprechenden Maßtoleranzen des Profiles, aufliegt.

Des Weiteren ist vorgesehen, dass die Halterung in einer Fläche durch entsprechende Antriebe bewegbar ist. Vorzugsweise ist dabei diese Fläche parallel zur Verschweißungsfläche der zu verschweißenden Profilstäbe. Diese Antriebe (zum Beispiel CNC-Achsen, also Elektroantriebe) sind orthogonal, bevorzugt rechtwinklig zueinander angeordnet. Die Beweglichkeit der Halterung in der Fläche ist zum einen günstig für die Positionierung der einzelnen Bearbeitungswerkzeuge (einerseits dem Fräser, andererseits das Abstechmesser) und ist zum anderen natürlich auch günstig bei der Ausführung der Bearbeitung, da durch die flächige Beweglichkeit auch komplexere Bearbeitungen problemlos ausgeführt werden können. Realisiert wird diese Beweglichkeit zum Beispiel dadurch, dass sich die Halterung auf einem Kreuzschlitten oder ähnlichen befindet.

Des Weiteren umfasst die Erfindung auch eine Maschine für die Herstellung eines Fensterrahmens oder eines Teiles eines Fensterrahmens, wobei die Maschine mindestens eine Vorrichtung, wie vorgehend beschrieben, aufweist. Dabei umfasst die Erfindung auch Maschinen, die eine entsprechende Vorrichtung an mehreren, bevorzugt an jeder Ecke, wo eine Verschweißung stattfindet, aufweist. Solche Maschinen werden auch als Mehrkopfmaschinen bezeichnet.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung schematisch dargestellt. Es zeigen:
- Fig. 1a:: in einer dreidimensionalen Ansicht die Halterung nach der Erfindung mit der Messeraufnahme in Ruheposition
- Fig. 1b:: in einer dreidimensionalen Ansicht die Halterung nach der Erfindung mit der Messeraufnahme in Arbeitsposition
- Fig. 2:: in einer Draufsicht den Einsatz der Halterung einer erfindungsgemäßen Vorrichtung
- Fig. 3:: in einer dreidimensionalen Ansicht die Halterung nach der Erfindung in einer ersten Arbeitsposition
- Fig. 4:: in einer dreidimensionalen Ansicht die Halterung nach der Erfindung in einer zweiten Arbeitsposition

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

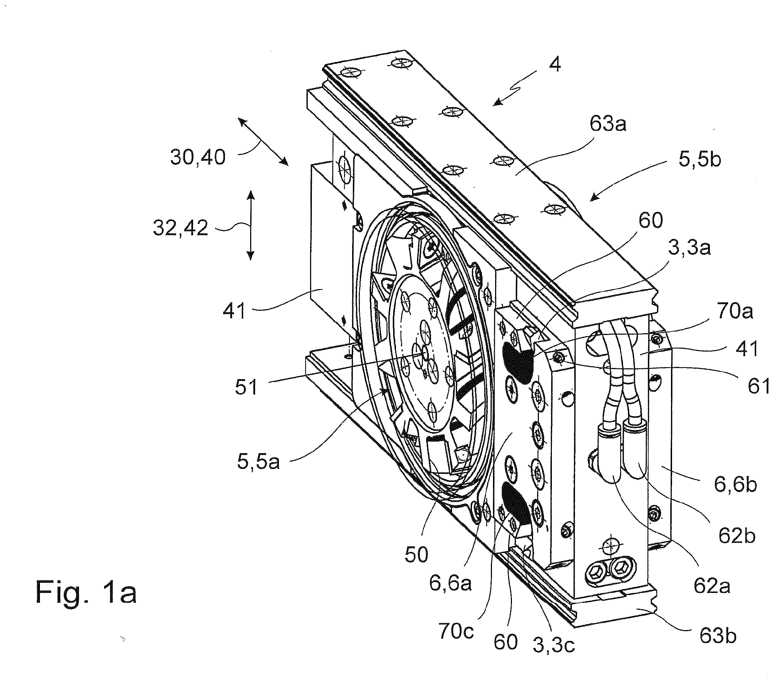

In Figur 1a ist die Halterung 4, wie sie zum Beispiel in dem erfindungsgemäßen Verfahren oder der erfindungsgemäßen Vorrichtung bzw. der erfindungsgemäßen Maschine zum Einsatz kommt, schematisch gezeigt. Im Wesentlichen ist die Halterung 4 quaderförmig. Hier nicht dargestellte Antriebe bewirken, dass die Halterung 4 in einer Ebene, die parallel oder identisch ist mit der Verschweißungsfläche (das ist die Ebene, auf welche hin die zu verschweißenden Profilstäbe verschweißt werden) beweglich ist, dies ist mit den orthogonal (insbesondere rechtwinklig) zueinanderstehenden Doppelpfeilen 30,40 bzw. 32,42 gezeigt.

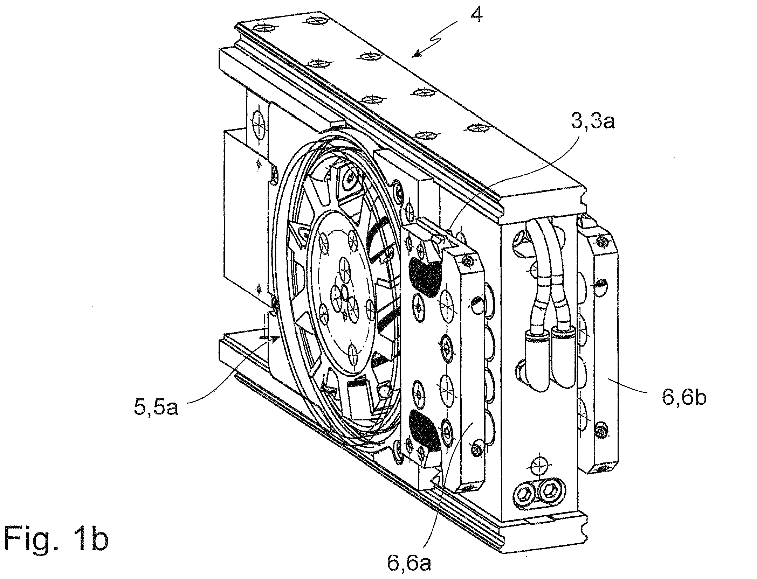

Die Halterung 4 besitzt ein Gestell 41. In dem Gestell 41 sind die beiden Fräser 5, 5a, 5b und deren Antriebe bzw. ihr gemeinsamer Antrieb gelagert. Auch nimmt das Gestell 41 mittelbar die Abstechmesser 3 auf. Die Abstechmesser 3 sind je auf einer Messeraufnahme 6, 6a, 6b angeordnet. Die in Figur 1a, 1b gezeigte Halterung 4 dient zum gleichzeitigen Bearbeiten der beiden Profilstäbe 1,2, weswegen die Halterung 4 doppelt bestückt ist, also zwei Fräser 5, 5a, 5b und auch zwei Messeraufnahmen 6, 6a, 6b besitzt. Bevorzugt sind die Fräser 5, 5a, 5b und auch die beiden Messeraufnahmen 6, 6a, 6b an den großen Seitenflächen der Halterung 4 symmetrisch angeordnet.

Der Fräser 5, 5a, 5b ist als Planfräser ausgestaltet. Die Schneiden 50 des Fräsers 5, 5a, 5b befinden sich an dem axialen Ende des Fräskörpers und erstrecken sich dabei radial, jeweils bezogen auf die Rotationsachse 51 des Fräsers 5.

Seitlich, und in Bearbeitungseinsatz horizontal neben den Fräsern 5, 5a, 5b, befinden sich jeweils die Messeraufnahmen 6, 6a, 6b. In dem hier gezeigten Ausführungsbeispiel sind jeweils zwei Abstechmesser 3, 3a, 3c auf der Messeraufnahme 6a angeordnet. Auch die hier verdeckte zweite Messeraufnahme 6b ist mit zwei Abstechmesser 3 ausgestattet. Bezüglich der Rotationsachse 51 des Fräsers 5 befindet sich ein erstes Abstechmesser 3a oben, das zweite, untere Abstechmesser 3c befindet sich auf der gegenüberliegenden Seite, unten an der Messeraufnahme 6a. Vorzugsweise sind die beiden Abstechmesser 3a, 3c symmetrisch an der Messeraufnahme 6a, also im oberen und unteren Bereich angeordnet.

Die Messeraufnahme 6,6a wird von einem Plattenrand 60 begrenzt, die Abstechmesser 3a, 3c stehen etwas über den jeweiligen Plattenrand 60 hervor. Im Bereich der Abstechmesser 3a, 3c schließen sich in Schneidrichtung hinter den Abstechmessern 3a, 3c die Abführkanäle 70a und 70c an, die Teil der Absaugvorrichtung sind und zuverlässig dafür sorgen, dass die abgetrennten Späne sofort abgeführt und von der Bearbeitungsstelle entfernt werden. Auch für die von den Fräser 5, 5a, 5b erzeugten Späne ist eine Absaugvorrichtung vorgesehen, deren Kanäle mit den Abführkanäle 70a bzw. 70c in Verbindung stehen.

Für die zuverlässige Befestigung des Abstechmessers 3 auf der Messeaufnahme 6 dient eine Schnellwechselvorrichtung 61.

Oben und unten an der Messeaufnahme 6 befinden sich je eine Führungsschienenfüße 63a, 63b, die mit hier nicht weiter dargestellten Führungsschienen der Vorrichtung haltend und führend zusammenwirken.

Mit 62a und 62b sind Druckleitungen gekennzeichnet, die je mit einem Arbeitszylinder in Verbindung stehen. Werden die Druckleitungen 62a, 62b mit Druck (pneumatischem oder hydraulischem) beaufschlagt, so expandiert der Kolben in dem Arbeitszylinder und bringt die Messeraufnahmen 6, 6a, 6b von der in Figur 1a gezeigten Ruheposition in die in Figur 1b gezeigten Arbeitsposition.

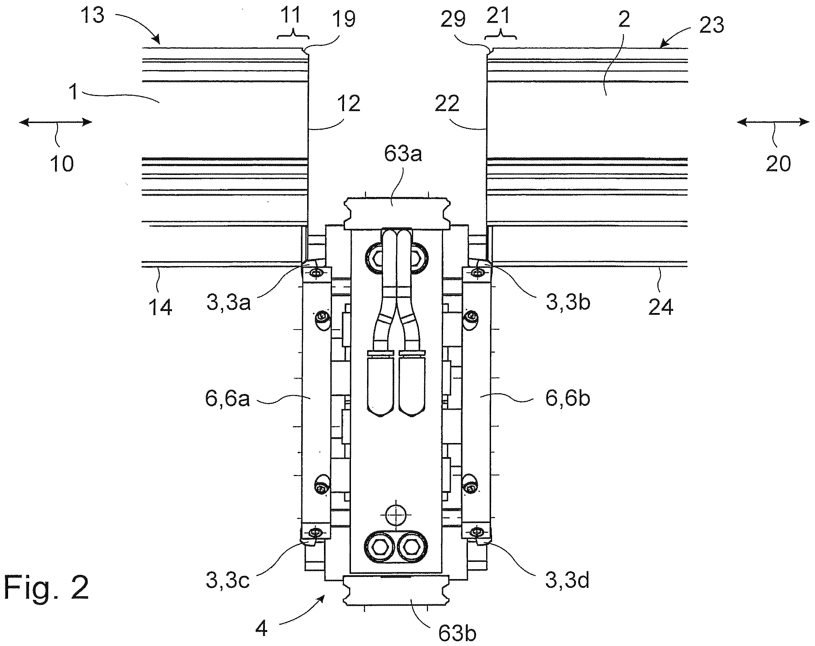

Figur 2 zeigt den zweiten Schritt der Bearbeitung der Profilstäbe 1,2 mit den Abstechmesser 3. In der hier gewählten Ansicht (in der von den beiden Profilstäben aufgespannten Ebene zum Beispiel von innen nach außen oder von außen nach innen) ist die Halterung 4 teilweise unterhalb der beiden Profilstäbe 1,2 positioniert. Die Messeraufnahmen 6, 6a, 6b befinden sich in der ausgezogenen Arbeitsposition derart, dass die jeweiligen Abstechmesser 3, 3a, 3b, vorzugsweise auf die Gehrungsbereiche 11,21 der Profilstäbe 1,2 wirken können.

Wie bereits ausgeführt zeigt Figur 2 den zweiten Schritt der Bearbeitung. Der erste Schritt wurde bereits ausgeführt, denn in der Profiloberseite 13,23 des ersten Profilstabes 1 bzw. zweiten Profilstabes 2 ist an der Profilkante 19,29 bereits eine Fase durch die unteren Abstechmesser 3 ,3c, 3d eingearbeitet worden.

Die unteren Abstechmesser 3, 3c, 3d sind daher dafür vorgesehen, die Profilkante 19,29 an der Profiloberseite 13,23 zu bearbeiten. Hingegen sind die oberen Abstechmesser 3 ,3a, 3b dafür vorgesehen, an der Profilkante 19,29 auf der Profilunterseite 14,24 eine entsprechende Bearbeitung vorzusehen. Dabei ist es günstig, dass die Profilstäbe 1,2 parallel zu ihrer Längserstreckung auf einer CNC-Achse angeordnet sind und so hochgenau positionierbar sind. Dies ist jeweils durch die Pfeile 10,20 angedeutet.

Geschickter Weise wurde vorher die jeweiligen Gehrungsflächen 12,22 von den Fräsen 5, 5a, 5b vorbearbeitet und es erfolgt jetzt der Bearbeitungschritt unter Einsatz der Abstechmesser 3. Die Bewegung der Halterung 4 und damit auch die Schnittbewegung der Abstechmesser 3, 3a und 3b ist senkrecht zur Blattebene.

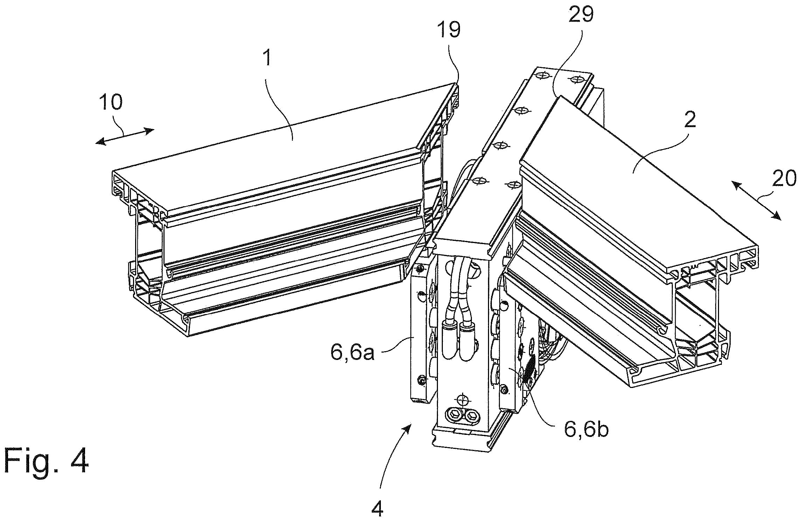

Figur 4 entspricht im Wesentlichen der Ansicht in Figur 2, nur, dass in Figur 4 eine dreidimensionale Ansicht gewählt ist. Die Bearbeitungssituation ist aber die gleiche.

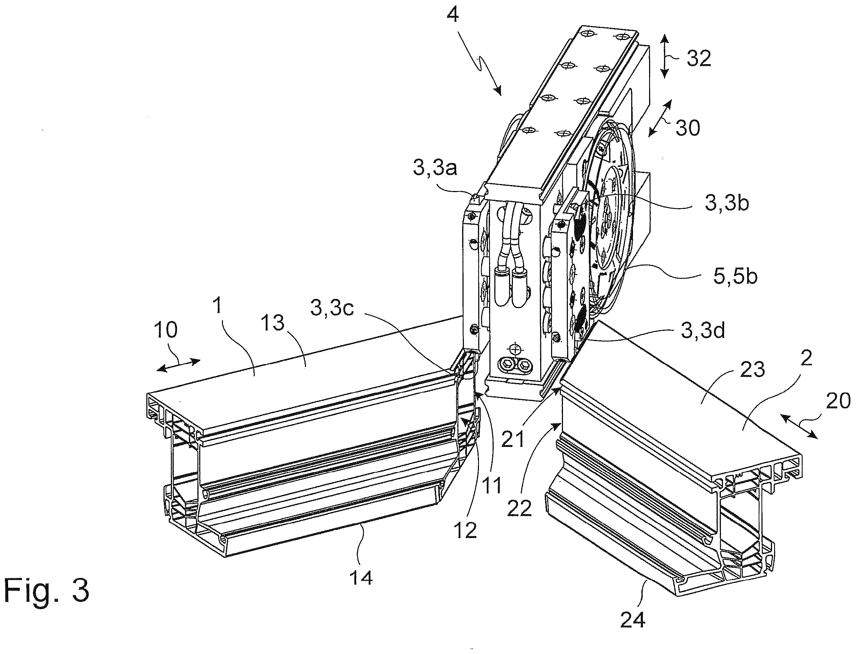

In Figur 3 ist hingegen der erste Schritt gezeigt, hier wird auf der Profiloberseite 13,23 mit den unteren Abstechmessern 3, 3c, 3d gerade an der Profilkante 19,29 die Fase (eine schräge Fläche) eingearbeitet.

Ein Pfiff des Vorschlages liegt insbesondere darin, dass mit der einen Halterung 4 gleichzeitig die beiden zu verschweißenden Profilstäbe 1,2 bearbeitet werden können. Die Bearbeitung erfolgt dabei bevorzugt gleichzeitig, was die Effizienz steigert. Genutzt wird dabei auch die hohe Positionierbarkeit der Profilstäbe 1,2 durch deren Spannvorrichtungen, um einerseits die Gehrungsflächen hochgenau bearbeiten zu können aber auch die Profilstäbe so zu positionieren, dass die Profilkanten 19,29 wie gewünscht bearbeitet werden können.

## Patentansprüche

1. Verfahren für das Verschweißen eines ersten, aus Kunststoff bestehenden Profilstabes (1) mit einem zweiten, aus Kunststoff bestehenden Profilstab (2), wobei das Verfahren folgende Schritte aufweist:
▪ Bereitstellen des ersten Profilstabes (1) und des zweiten Profilstabes (2);
▪ Bearbeiten zumindest eines Profilstabes (1, 2), insbesondere in seinem Gehrungsbereich (11, 21), mit einem Abstechmesser (3), wobei die Profilkante (19, 29), die die Profilaußenseite, insbesondere die Profilober- (13, 23), Profilunterseite (14, 24), der Innenfalz, oder die Außenecke, und die Gehrungsfläche des Profilstabes (1, 2) begrenzt, durch das Abstechmesser (3) bearbeitet wird, wobei eine Messeraufnahme (6, 6a, 6b) vorgesehen ist, die das Abstechmesser (3) aufnimmt, wobei eine Halterung (4) vorgesehen ist, die das Abstechmesser (3) trägt, wobei die Messeraufnahme (6, 6a, 6b) an der Halterung (4) beweglich gelagert ist und durch einen Antrieb in zumindest zwei verschiedene Positionen bringbar ist;
▪ Erwärmen der Profilstäbe (1, 2) zumindest an ihren Gehrungsflächen, wobei vor dem Erwärmen der Profilstab (1, 2) zusätzlich von einem Fräser (5, 5a, 5b) bearbeitet wird und die von dem Abstechmesser (3) bzw. Fräser (5, 5a, 5b) erzeugten Späne abgesaugt werden;
▪ Zusammenbringen der Gehrungsfläche des ersten Profilstabes (1) mit der Gehrungsfläche des zweiten Profilstabes (2) so, dass die erwärmten Bereiche der Gehrungsflächen eine materialschlüssige Verbindung zwischen dem ersten und den zweiten Profilstab (1, 2) ergibt.

2. Verfahren nach Anspruch 1, **dadurch gekennzeichnet, dass** die Profilstäbe (1, 2) je auf einer Spannvorrichtung aufgespannt bereitgestellt werden, und zumindest eine Spannvorrichtung mit dem gespannten Profil (1, 2) während der Bearbeitung bewegt wird und/oder die Bearbeitung des Profilstabes (1, 2) durch das Abstechmesser (3) in einem oder in mehreren Schritten erfolgt.

3. Verfahren nach einem der vorhergehenden Ansprüche, **dadurch gekennzeichnet, dass** gleichzeitig ein erstes Abstechmesser (3a) den ersten Profilstab (1) und ein zweites Abstechmesser (3c) den zweiten Profilstab (2) bearbeitet, während die Profilkante (19, 29), die die Profilaußenseite, insbesondere die Profilober- (13 ,23), Profilunterseite (14, 24), der Innenfalz, oder die Außenecke, und die Gehrungsfläche des Profilstabes (1, 2) begrenzt, durch das Abstechmesser (3) bearbeitet wird.

4. Verfahren nach einem der vorhergehenden Ansprüche, **dadurch gekennzeichnet, dass** vor dem Erwärmen die Gehrungsfläche des Profilstabs (1, 2), von einem Planfräser als Fräser (5, 5a, 5b) bearbeitet wird.

5. Vorrichtung für das Verschweißen eines ersten, aus Kunststoff bestehenden Profilstabes (1) mit einem zweiten, aus Kunststoff bestehenden Profilstab (2),
▪ wobei die Vorrichtung je eine, insbesondere entlang zumindest einer Raumrichtung (10,20) bewegbare Spannvorrichtung für das Halten bzw. Positionieren des jeweiligen Profilstabes (1,2), sowie ein Abstechmesser (3) für die Bearbeitung des Gehrungsbereiches (11,21) des Profilstabes (1,2) aufweist,
▪ wobei das Abstechmesser (3) ausgebildet ist, um die Profilkante, die die Profilaußenseite, insbesondere die Profilober-, Profilunterseite, der Innenfalz, oder die Außenecke, und die Gehrungsfläche des Profilstabes (1, 2) begrenzt, zu bearbeiten,
▪ wobei eine Halterung (4) vorgesehen ist, die das Abstechmesser (3) trägt,
▪ wobei das Abstechmesser (3) zumindest entlang einer Raumrichtung (30) beweg- und positionierbar gelagert ist,
▪ wobei eine Messeraufnahme (6) vorgesehen ist, die das mindestens eine Abstechmesser (3) aufnimmt, und
▪ wobei die Messeraufnahme (6) an der Halterung (4) beweglich gelagert ist und durch einen Antrieb in zumindest zwei verschiedene Positionen bringbar ist, und
▪ wobei ein Heizspiegel vorhanden ist, welcher zumindest entlang einer Raumrichtung (30) beweg- und positionierbar gelagert ist und für die Erwärmung zumindest der Gehrungsfläche (12,22) des Profilstabes (1,2) oder der Profilstäbe (1,2) vorgesehen ist, und
▪ wobei ein Fräser (5) vorgesehen ist, der ausgebildet ist, um den Profilstab (1, 2) vor dem Erwärmen zu bearbeiten,
▪ wobei eine Absaugvorrichtung für das Absaugen der durch den Fräser (5) und/oder das Abstechmesser (3) erzeugten Späne vorgesehen ist.

6. Vorrichtung nach Anspruch 5, **dadurch gekennzeichnet, dass** die Halterung (4) auch mindestens einen Fräser (5), insbesondere einen Planfräser trägt.

7. Vorrichtung nach einem der vorhergehenden Ansprüche 5 bis 6, **dadurch gekennzeichnet, dass** die Halterung (4) mindestens ein erstes und ein zweites Abstechmesser (3,3a,3b,3c,3d) und/oder einen ersten und einen zweiten Fräser, insbesondere Planfräser trägt.

8. Vorrichtung nach einem der vorhergehenden Ansprüche 5 bis 7, **dadurch gekennzeichnet, dass** an der Halterung (4) bzw. der Messeraufnahme (6) eine Schnellwechselvorrichtung (31) für das Abstechmesser (3) vorgesehen ist und/oder seitlich neben dem Abstechmesser (3) ein Abtastelement für die Erfassung der Profilkontur vorgesehen ist.

9. Vorrichtung nach einem der vorhergehenden Ansprüche 5 bis 8, **dadurch gekennzeichnet, dass** die Halterung (4) in einer Fläche (30,32) durch entsprechende Antriebe bewegbar ist

10. Maschine für die Herstellung eines Fensterrahmens oder eines Teiles eines Fensterrahmens, wobei die Maschine mindestens eine Vorrichtung nach einem der vorhergehenden Ansprüche 5 bis 9 aufweist.

## Claims

1. Method for welding a first profile bar made of plastic
(1) with a second profiled bar (2) made of plastic, the method comprising the following steps:
▪ Provide the first profile bar (1) and the second profile bar (2);
Machining of at least one profiled bar (1, 2), in particular in its mitre region (11, 21), with a parting-off knife (3), wherein the profiled edge (19, 29), which delimits the outer side of the profile, in particular the upper side (13, 23), lower side (14, 24), the inner fold or the outer corner, and the mitre surface of the profiled bar (1, 2), is machined by the parting-off knife (3), wherein a knife holder (6, 6a, 6b) is provided, which receives the parting-off knife (3) is machined by the parting-off blade (3), wherein a blade holder (6, 6a, 6b) is provided which receives the parting-off blade (3), wherein a holder (4) is provided which carries the parting-off blade (3), wherein the blade holder (6, 6a, 6b) is movably mounted on the holder (4) and can be brought into at least two different positions by a drive;
▪ Heating of the profiled bars (1, 2) at least on their mitre surfaces, wherein the profiled bar (1, 2) is additionally machined by a milling cutter (5, 5a, 5b) before heating and the chips produced by the cutting-off blade (3) or milling cutter (5, 5a, 5b) are extracted;
▪ Bringing together the mitre surface of the first profiled bar (1) with the mitre surface of the second profiled bar (2) in such a way that the heated areas of the mitre surfaces produce a material-locking connection between the first and second profiled bars (1, 2).

2. Method according to claim 1, **characterised in that** the profile bars (1, 2) are each provided clamped on a clamping device, and at least one clamping device with the clamped profile (1, 2) is moved during processing and/or the machining of the profiled bar (1, 2) by the cutting-off blade (3) takes place in one or more steps.

3. Method according to one of the preceding claims, **characterised in that** a first cut-off blade (3a) simultaneously machines the first profile bar (1) and a second cut-off blade (3c) simultaneously machines the second profile bar (2), while the profile edge (19, 29), which delimits the profile outer side, in particular the profile upper side (13, 23), profile lower side (14, 24), the inner rebate or the outer corner, and the mitre surface of the profile bar (1, 2), is machined by the cut-off blade (3).

4. Method according to one of the preceding claims, **characterised in that,** before heating, the mitre surface of the profiled bar (1, 2) is machined by a face milling cutter as a milling cutter (5, 5a, 5b).

5. Device for welding a first profiled bar (1) made of plastic to a second profiled bar (2) made of plastic,
▪ wherein the device has a clamping device, in particular movable along at least one spatial direction (10, 20), for holding or positioning the respective profiled bar (1, 2), and a cutting-off blade (3) for machining the mitre region (11, 21) of the profiled bar (1, 2),
▪ wherein the cut-off blade (3) is designed to machine the profile edge which delimits the profile outer side, in particular the profile upper side, profile lower side, the inner rebate or the outer corner, and the mitre surface of the profile bar (1, 2),
▪ wherein a holder (4) is provided which carries the parting-off blade (3),
▪ wherein the parting-off blade (3) is mounted so as to be movable and positionable at least along a spatial direction (30),
▪ wherein a knife holder (6) is provided which receives the at least one parting-off knife (3), and
▪ wherein the blade holder (6) is movably mounted on the holder (4) and can be brought into at least two different positions by a drive, and
▪ wherein a heating mirror is provided, which is mounted so as to be movable and positionable at least along a spatial direction (30) and is provided for heating at least the mitre surface (12, 22) of the profiled bar (1, 2) or of the profiled bars (1, 2), and
▪ wherein a milling cutter (5) is provided, which is designed to machine the profiled bar (1, 2) before heating,
▪ wherein an extraction device is provided for extracting the chips produced by the milling cutter (5) and/or the parting-off blade (3).

6. Device according to claim 5, **characterised in that** the holder (4) also carries at least one milling cutter (5), in particular a face milling cutter.

7. Device according to one of the preceding claims 5 to 6, **characterised in that** the holder (4) carries at least a first and a second parting-off cutter (3, 3a, 3b, 3c, 3d) and/or a first and a second milling cutter, in particular a face milling cutter.

8. Device according to one of the preceding claims 5 to 7, **characterised in that** a quick-change device (31) for the parting-off blade (3) is provided on the holder (4) or the blade holder (6) and/or a scanning element for detecting the profile contour is provided laterally next to the parting-off blade (3).

9. Device according to one of the preceding claims 5 to 8, **characterised in that** the holder (4) is movable in a surface (30, 32) by corresponding drives

10. A machine for manufacturing a window frame or a part of a window frame, the machine comprising at least one device according to any one of the preceding claims 5 to 9.

## Revendications

1. Procédé de soudage d'une première barre profilée en matière plastique (1) avec une deuxième barre profilée (2) constituée de matière plastique, le procédé comprenant les étapes suivantes :
▪ Mise à disposition de la première barre profilée (1) et de la deuxième barre profilée (2) ;
▪ Usinage d'au moins une barre profilée (1, 2), en particulier dans sa zone d'onglet (11, 21), avec un couteau à tronçonner (3), l'arête de profilé (19, 29) qui délimite le côté extérieur du profilé, en particulier le côté supérieur du profilé (13, 23), le côté inférieur du profilé (14, 24), la feuillure intérieure, ou le coin extérieur, et la surface d'onglet de la barre profilée (1, 2), par le couteau à tronçonner (3), un logement de couteau (6, 6a, 6b) étant prévu, qui reçoit le couteau à tronçonner (3), un support (4) étant prévu, qui porte le couteau à tronçonner (3), le logement de couteau (6, 6a, 6b) étant logé de manière mobile sur le support (4) et pouvant être amené dans au moins deux positions différentes par un entraînement ;
▪ le chauffage des barres profilées (1, 2) au moins sur leurs surfaces à onglet, la barre profilée (1, 2) étant en outre usinée par une fraise (5, 5a, 5b) avant le chauffage et les copeaux générés par le couteau à tronçonner (3) ou la fraise (5, 5a, 5b) étant aspirés ;
▪ la mise en contact de la surface d'onglet de la première barre profilée (1) avec la surface d'onglet de la deuxième barre profilée (2) de telle sorte que les zones chauffées des surfaces d'onglet donnent une liaison par adhérence de matériau entre la première et la deuxième barre profilée (1, 2).

2. Procédé selon la revendication 1, **caractérisé en ce que** les barres profilées (1, 2) sont mises à disposition, chacune serrée sur un dispositif de serrage, et au moins un dispositif de serrage avec le profilé serré (1, 2) se déplace pendant l'usinage et/ou l'usinage de la barre profilée (1, 2) par le couteau à tronçonner (3) s'effectue en une ou plusieurs étapes.

3. Procédé selon l'une des revendications précédentes, **caractérisé en ce que**, simultanément, un premier couteau de tronçonnage (3a) usine la première barre profilée (1) et un deuxième couteau de tronçonnage (3c) usine la deuxième barre profilée (2), tandis que l'arête de profilé (19, 29), qui délimite la face extérieure du profilé, en particulier la face supérieure (13, 23), la face inférieure (14, 24) du profilé, la feuillure intérieure, ou l'angle extérieur, et la surface à onglet de la barre profilée (1, 2), est usinée par le couteau de tronçonnage (3).

4. Procédé selon l'une des revendications précédentes, **caractérisé en ce que**, avant le chauffage, la surface d'onglet de la barre profilée (1, 2) est usinée par une fraise à surfacer en tant que fraise (5, 5a, 5b).

5. Dispositif pour le soudage d'une première barre profilée (1) constituée de matière plastique avec une deuxième barre profilée (2) constituée de matière plastique,
▪ le dispositif présentant respectivement un dispositif de serrage mobile, en particulier le long d'au moins une direction spatiale (10, 20), pour le maintien ou le positionnement de la barre profilée respective (1, 2), ainsi qu'un couteau à découper (3) pour l'usinage de la zone en onglet (11, 21) de la barre profilée (1, 2),
▪ le couteau à tronçonner (3) étant conçu pour usiner l'arête du profilé qui délimite le côté extérieur du profilé, en particulier le côté supérieur, le côté inférieur du profilé, la feuillure intérieure, ou l'angle extérieur, et la surface à onglet de la barre profilée (1, 2),
▪ un support (4) étant prévu, qui porte la lame de tronçonnage (3),
▪ la lame de tronçonnage (3) étant montée de manière à pouvoir être déplacée et positionnée au moins le long d'une direction spatiale (30),
▪ un logement de lame (6) étant prévu, qui reçoit la au moins une lame de tronçonnage (3), et
▪ le logement de lame (6) étant logé de manière mobile sur le support (4) et pouvant être amené dans au moins deux positions différentes par un entraînement, et
▪ un miroir chauffant étant présent, lequel est monté de manière à pouvoir être déplacé et positionné au moins le long d'une direction spatiale (30) et est prévu pour le chauffage d'au moins la surface en onglet (12, 22) de la barre profilée (1, 2) ou des barres profilées (1, 2), et
▪ une fraise (5) étant prévue, laquelle est conçue pour usiner la barre profilée (1, 2) avant le chauffage, un dispositif d'aspiration étant prévu pour l'aspiration des copeaux générés par la fraise (5) et/ou la lame de tronçonnage (3).

6. Dispositif selon la revendication 5, **caractérisé en ce que** le support (4) porte également au moins une fraise (5), en particulier une fraise à surfacer.

7. Dispositif selon l'une des revendications précédentes 5 à 6, **caractérisé en ce que** le support (4) porte au moins une première et une deuxième lame de tronçonnage (3, 3a, 3b, 3c, 3d) et/ou une première et une deuxième fraise, notamment une fraise à surfacer.

8. Dispositif selon l'une des revendications précédentes 5 à 7, **caractérisé en ce qu'**un dispositif de changement rapide (31) pour le couteau de tronçonnage (3) est prévu sur le support (4) ou le logement de couteau (6) et/ou un élément de balayage est prévu latéralement à côté du couteau de tronçonnage (3) pour la détection du contour du profil.

9. Dispositif selon l'une des revendications précédentes 5 à 8, **caractérisé en ce que** le support (4) peut être déplacé dans une surface (30, 32) par des entraînements correspondants.

10. Machine pour la fabrication d'un cadre de fenêtre ou d'une partie d'un cadre de fenêtre, ladite machine comprenant au moins un dispositif selon l'une quelconque des revendications précédentes 5 à 9.
